# EUROPEAN PATENT SPECIFICATION

(11) **EP 2 278 603 B1**
(45) Date of publication and mention of the grant of the patent: **12.09.2018**
(21) Application number: 09009398.0
(22) Date of filing: 20.07.2009
(51) Int. Cl.: H01H 33/662

(54) **Method of manufacturing a current terminal for embedded pole part**
Verfahren zur Herstellung einer Stromanschlussklemme für einen eingebetteten Schalterpolteil
Procédé de fabrication d'une borne de courant pour un élément de pôle intégré

(43) Date of publication of application: 26.01.2011
(73) Proprietor: ABB Schweiz AG, 5400 Baden (CH)
(72) Inventor: Humpert, Christof, 47877 Willich (DE); Shang, Wenkai, 40878 Ratingen (DE)
(74) Representative: Schmidt, Karl Michael

(56) References cited:
- WO-A2-2004/097873
- FR-A- 2 920 251
- FR-A- 2 925 755
- US-A- 4 618 749

## Description

The invention relates to a method of manufacturing a current terminal for embedded pole part, in which a vacuum interrupter will be moulded with an electric insulating housing by a hot and pressure injection process, and pole part itself, in accordance with the preamble of patent claim 1.

The embedding of vacuum interrupters in epoxy is a well tested technology and in this technique the filling pressure is low and it will not cause damage of the vacuum interrupter. Furthermore the force on the electric terminal is also not critical and no special fixation is needed. Here the filling time and curing time are relative long.

And also injection moulding of thermoplastic material is used in this field of technology. During the injection moulding, the pressure in the cavity of the mould is very high during the filling and packing period. The vacuum interrupter will see the very high pressure, special attention should be paid on the metal cover area.

By using injective moulding method with thermal plastic material instead of epoxy material to embed the vacuum interrupter inside the insulation material, the difference is the pressure value applied to the insert, in general at reactive epoxy moulding situation the pressure is from several bars to maximum 20-30 bars, at this pressure level, it will results not so high force and stress for the current connection and for the vacuum interrupters, therefore no special constructions are needed to protect the vacuum interrupters and also no special fixations are needed for the upper terminal. In this case the filling time and curing time is relatively long. FR 2 925 755 discloses an embedded pole part, in which an additional cap for the upper part of a vacuum interrupter is used, which should protect the the body of the vacuum interrupter during injection moulding. This protection cap is a finally lost element, which will be finally embedded with the complete pole part. This construction has the disadvantage, that the protection cap only protects metal-cermaic transition areas, but although guides the complete forces, introduced by the injection process towards the ceramic body. In the WO2004/097873 A2 is disclosed a vacuum encapsulation for a vacuum switch, which is covered with a kind of a cushioning, which is arranged unspecifically around der complete Vaccum Chamber before it is covered by an epoxy housing.

In injection moulding for vacuum interrupters, the maximum pressure could reach several hundred bars, the end metal cover of vacuum interrupters has thickness of several millimeters which could not withstand such high pressure, at the same time the resulted forces on the upper terminal is very high, therefore a very strong construction and fixation of the upper terminal in the cavity and protection for the end metal cover of vacuum interrupters are needed, in order to avoid deformation of it. In this case due to the very high pressure, the filling and packing time is very short.

So it is an object of the invention, to design at first the upper current connection (terminal) and related fixation of it in cavity. Second is to protect the vacuum interrupter metal cover from mechanical deformation due to the very high pressure during the injection moulding of thermoplastic material.

So this invention has to solve these two problems for injective moulding:
a. protection method for the end metal cover of vacuum interrupters;
b. strong construction and fixation method of the upper connector in cavity.

These problems are solved with the features of claim 1. The invention is defined by the features of claim 1. So protection of the vacuum interrupter is given as well as the integral moulding of the electric terminals of the embedded poles in one further moulding or thermoplastic injection process. According to the invention the pressure protecting element is used or implemented coincidentially as a heat distribution element. According to the invention the pressure protecting element is an integral part of the terminal, which has to be fixed at the upper part of the vacuum interrupter before inserting it completely into the mould. According to an example, not belonging to the invention the pressure protecting element is a separate part of the terminal, so that the protecting element in a first step has to be fixed at the upper part of the vacuum interrupter and in a second step, the terminal has to be fixed at the upper part of the vacuuminterrupter before inserting it completely into the mould.

According to the invention the so prepared vacuum interrupter will be fixed in the mould by fixing elements, which transmit the fixation forces only at the aforesaid terminal and the aforesaid protection element of the vacuum interrupter.

For a quick handling in manufacturing, the fixation will be realized by clamshells, bolts which are inserted from the backside of the terminal arrangement, and near the axis of the vacuum interrupter. One embodiment of the invention and one example not belonging to the invention are further explained.
- The integrated solution, representing an embodiment of the invention: In this solution, the current carrying part (the terminal) is made in such a way that it has also the function of protecting the vacuum interrupter cover as shown in the figure. The advantage is that one part solution, the disadvantage is the cost. The fixation of this part is used as shown in the figure. The fixation could be by screw fixation or by insert a cylinder into the part with corresponding holes. This part could be made by current conducting material like Copper, Aluminium or alloys from them.
- The combined solution, representing an example, not belonging to the invention: In this solution, the current carrying part and the protection part is separated. The idea is that these two parts are assembled in such a way that the force on the protection part is also overtaken by the current connection part and no direct force transferred to the vacuum interrupter and this current connection part could be also fixed in the cavity in someway to avoid further deformation. The current carrying part could be made of Copper, Aluminium or alloys from them. The protection part could be made from plastic material, Copper material, metal material, which are dependent on the needs.

To fix the upper terminal in the cavity in both cases the following solutions are possible:
- **Fixation by screws:** The terminal has tapped holes, which are needed to connect the resulting pole parts mounted on a circuit breaker with the switchgear. These holes can also be used to fix the upper terminal in the cavity. It is possible to screw the terminals directly in the cavity with threaded rods which are part of the complete mould. In another solution special metal parts, formed e.g. like cylinders or cones, are screwed together with the terminals and then inserted in the cavity. Within the cavity the metal parts are snapped in and fixed to the mould without clearance.
- **Fixation by movable fixing elements:** In addition or alternatively to screwing it the upper terminal is fixed by additional elements integrated in the mould, which are moved back after cooling of the thermoplastic material. Examples for such movable elements are given in the following:
   ∘ Fixation with an additional bolt from the rear: To fix the upper terminal in the mould it is possible to use a bolt, which is moved into a corresponding hole at the backside of the terminal. This bolt will be moved back after the injection process.
   ∘ The additional elements are formed like a clamshell holding the terminal on the round part from three sides or like a shuck moved over the round part of the terminal.
   ∘ Fixation with an additional bolt near the axial line of the vacuum interrupter in order to hold the upper terminal and vacuum interrupter in position.

   The volume which gets free by moving back the fixing elements can be filled with thermoplastic material using e.g. a hot-channel system with needle valve. It is also possible to fill this free volume during the injection moulding process at the end of the filling process or during the packing process. At that time the inlay is stabilized by the hardened thermoplastic material, while near the gate the thermoplastic material is fluid enough to enable the filling. In another solution the remaining hole in the thermoplastic pole part is closed after the moulding process by a plug, glued or welded together with the pole part.

Furthermore it is important to say, that the pressure protecting element, or better the cap has an additional function, which is independent from its use as pressure protection use. This is the functionality of a heat distribution element.

### Description

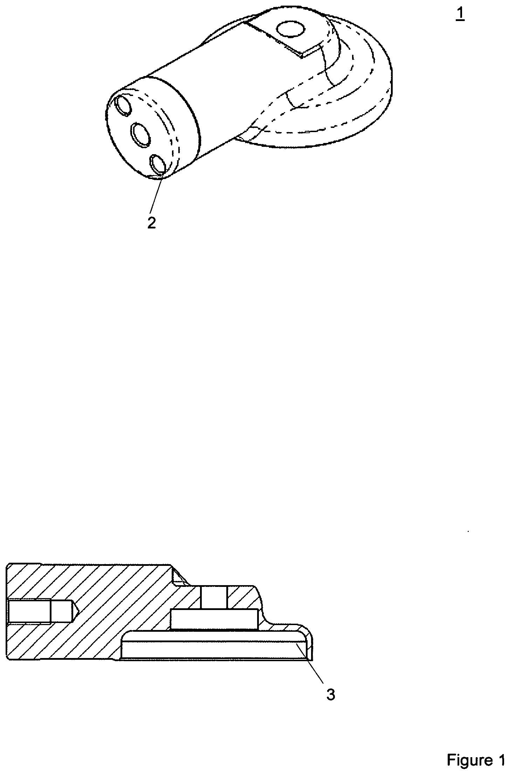

Figure 1 shows such a pressure protecting and/or heat distribution element 1. It is fixed as a cap on top of the vacuum interrupter 10. It forms a kind of a cap with an integrated electric terminal. The lower part of figure 1 once more shows it in a cut. From this is seen, that the element is a one piece element, which has to be fixed as a cap ontop of the vacuum interrupter. It covers the top of the vacuum interrupter 10 and protect it for the following thermoplastic high pressure and high temperature proceeding.

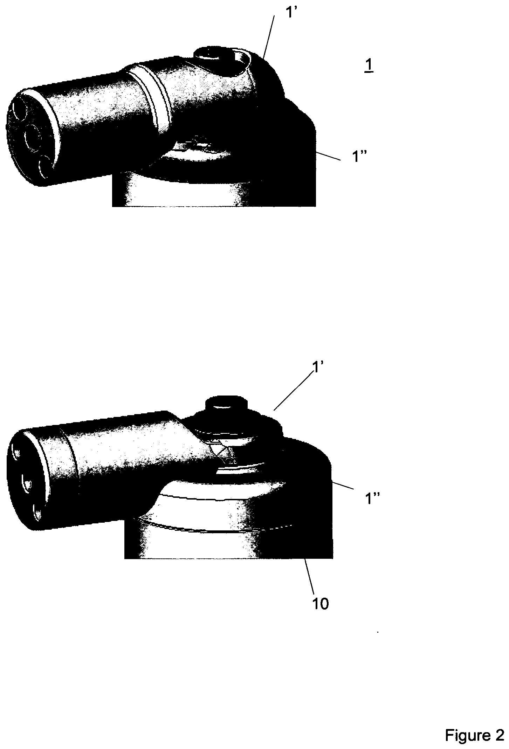

Figure 2 shows an example, not belonging to the invention of the so called separate solution. The current carrying part 1' and the protection part 1" are separated parts, mounted together on the vacuum interrupter. So figure 2 shows two alternatives of this separate solution.

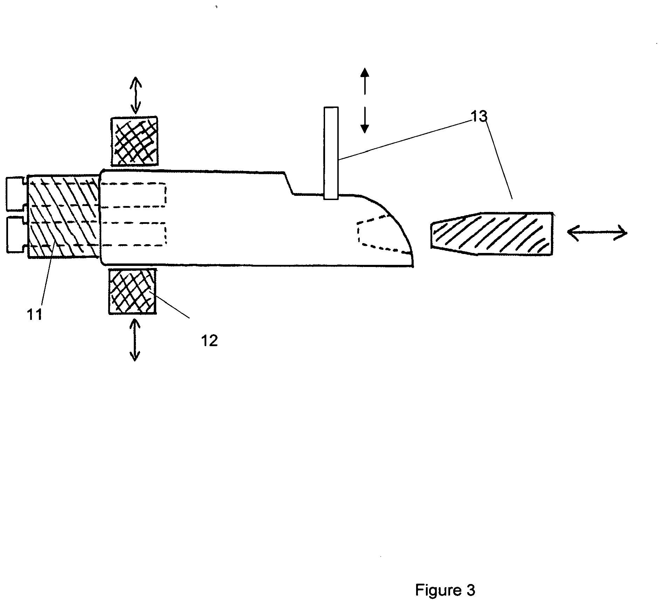

Figure 3 shows the solution by separate fixation of the element 1 in the mould. First, an additional mould part 11 screwed to the electric terminal is used. Furthermore, the fixation is realized by a clampshell 12. A further fixation of the protection part 1 near to the vacuum interrupter in the mould is a further bolt 13 which is inserted from the side or from ontop into the part 1.

## Claims

1. Method for manufacturing embedded pole parts for medium voltage use, by which a vacuum interrupter is embedded in a hot process by injecting embedding thermoplastic material in a mould in which the vacuum interrupter is positioned, wherein at the position of the upper electric terminal at the fixed contact side of the vacuum interrupter a pressure protecting element (1) is placed into the mould, on the upper part on the fixed contact side of the vacuum interrupter together with it, and wherein the pressure protecting and reinforcement element (1) and the terminal as well as the vacuum interrupter will be embedded by injection moulding and wherein the pressure protecting element (1) is cap-shaped on top of the vacuum interrupter, and has coincidentially the additional function of a heat distribution element, wherein the pressure protecting element (1) is an integral part of the terminal, which has to be fixed at the upper part, that means at the fixed contact side of the vacuum interrupter before inserting it completely into the mould of the injection moulding machine, wherein the pressure protecting element (1) integrating the upper terminal is fixed in the mould by additional fixing elements (11, 12, 13), integrated in the mould which are moved back after cooling of the thermoplastic material, **characterized in that** the so prepared vacuum interrupter will be fixed in the mould by said additional fixing elements, which transmit the resulting forces only at the aforesaid terminal and the aforesaid protection element of the vacuum interrupter, wherein said additional fixing elements are: an additional mould part (11) screwed to the electric terminal, a clampshell (12) and a further bolt (13) which is inserted from the side or from ontop into the pressure protecting element (1).

## Patentansprüche

1. Verfahren zur Herstellung von Eingießpolteilen zur Mittelspannungsverwendung, durch das eine Vakuumschaltkammer in einem heißen Prozess durch Einspritzen eines thermoplastischen Eingießmaterials in eine Form eingegossen wird, in der die Vakuumschaltkammer positioniert ist, wobei bei der Position des oberen elektrischen Anschlusses bei der Festkontaktseite der Vakuumschaltkammer ein Druckschutzelement (1) in der Form platziert ist, auf dem oberen Teil auf der Festkontaktseite der Vakuumschaltkammer zusammen damit, und wobei das Druckschutz-und-Verstärkung-Element (1) und der Anschluss sowie die Vakuumschaltkammer durch Spritzguss eingegossen werden und wobei das Druckschutzelement (1) kappenförmig auf der Vakuumschaltkammer ist und gleichzeitig die zusätzliche Funktion eines Wärmeverteilungselements aufweist, wobei das Druckschutzelement (1) ein integraler Teil des Anschlusses ist, der an dem oberen Teil, das heißt an der Festkontaktseite der Vakuumschaltkammer, bevor sie vollständig in die Form der Spritzgussmaschine eingesetzt wird, befestigt werden muss, wobei das Druckschutzelement (1), das den oberen Anschluss integriert, fest in der Form durch zusätzliche Befestigungselemente (11, 12, 13) befestigt ist, die in der Form integriert sind und die nach einem Abkühlen des thermoplastischen Materials zurückbewegt werden, **dadurch gekennzeichnet, dass** die so vorbereitete Vakuumschaltkammer in der Form durch die zusätzlichen Befestigungselemente befestigt wird, die die resultierenden Kräfte lediglich an dem zuvor genannten Anschluss und dem zuvor genannten Schutzelement der Vakuumschaltkammer übertragen, wobei die zusätzlichen Befestigungselemente Folgendes sind: ein zusätzliches Formteil (11), das an den elektrischen Anschluss angeschraubt ist, eine Klemmschelle (12) und ein weiterer Bolzen (13), der von der Seite oder von oben in das Druckschutzelement (1) eingesetzt ist.

## Revendications

1. Procédé de fabrication de pièces polaires enrobées pour une utilisation à tension moyenne, par le biais duquel un interrupteur à vide est enrobé dans un procédé à chaud par injection d'un matériau d'enrobage thermoplastique dans un moule dans lequel est positionné l'interrupteur à vide, un élément de protection sous pression (1) étant placé dans le moule au niveau de l'emplacement de la borne électrique supérieure du côté du contact fixe de l'interrupteur à vide, sur la partie supérieure sur le côté du contact fixe de l'interrupteur à vide conjointement avec celui-ci, et l'élément de protection sous pression et de renfort (1) et la borne ainsi que l'interrupteur à vide étant destinés à être enrobés par moulage par injection et l'élément de protection sous pression (1) étant en forme de coiffe au-dessus de l'interrupteur à vide, et possédant incidemment la fonction supplémentaire d'un élément de distribution de chaleur, l'élément de protection sous pression (1) faisant partie intégrante de la borne, qui doit être fixée au niveau de la partie supérieure, c'est-à-dire au niveau du côté du contact fixe de l'interrupteur à vide avant d'être insérée complètement dans le moule de la machine de moulage par injection, l'élément de protection sous pression (1) comprenant la borne supérieure étant fixé dans le moule par le biais d'éléments de fixation (11, 12, 13) supplémentaires, intégrés dans le moule, qui sont reculés après le refroidissement du matériau thermoplastique, **caractérisé en ce que** l'interrupteur à vide ainsi préparé sera fixé dans le moule par le biais desdits éléments de fixation supplémentaires, qui transmettent les forces résultantes uniquement au niveau de ladite borne et dudit élément de protection de l'interrupteur à vide, lesdits éléments de fixation supplémentaires étant : une partie de moule (11) supplémentaire vissée sur la borne électrique, des mâchoires (12) et une tige filetée (13) supplémentaire qui est insérée depuis le côté ou le dessus dans l'élément de protection sous pression (1).
